# EUROPEAN PATENT APPLICATION

(11) **EP 4 746 123 A1**
(43) Date of publication of application: **20.05.2026**
(21) Application number: 24924504.4
(22) Date of filing: 16.12.2024
(51) Int. Cl.: H01M 10/613, H01M 10/6554, H01M 10/6567

(54) **THERMAL MANAGEMENT SYSTEM, BATTERY PACK, AND VEHICLE**

(30) Priority: 21.10.2024 CN 202422543971 U
(71) Applicant: Eve Energy Co., Ltd., Huizhou, Guangdong 516006 (CN)
(72) Inventor: YIN, Xiaoqiang, Huizhou, Guangdong 516006 (CN)
(74) Representative: HGF
(86) International application number: PCT/CN2024/139621
(87) International publication number: WO 2025/171742

(57) **Abstract**

Provided are a thermal management system, a battery pack, and a vehicle. The thermal management system includes a main liquid inlet pipe (10), a main liquid outlet pipe (20), and at least two liquid cooling plates (30). A main liquid inlet (11) and at least two liquid inlets (121) are spaced apart and disposed on the main liquid inlet pipe (10) in sequence. A main liquid outlet (21) and at least two liquid outlets (221) are spaced apart and disposed on the main liquid outlet pipe (20) in sequence. The at least two liquid cooling plates (30) are spaced apart along a preset direction. The at least two liquid inlets (121), the at least two liquid cooling plates (30), and the at least two liquid outlets (221) correspond to each other in a one-to-one manner and communicate with each other in sequence. The thermal management system includes at least one of the following configurations: The cross-sectional area of a liquid inlet (121) closer to the main liquid inlet (11) is smaller than the cross-sectional area of a liquid inlet (121) farther from the main liquid inlet (11); or the liquid flow space inside a liquid cooling plate (30) closer to the main liquid inlet (11) is smaller than the liquid flow space inside a liquid cooling plate (30) farther from the main liquid inlet (11).

## Description

This application claims priority to Chinese Patent Application No. 202422543971.2 filed with the China National Intellectual Property Administration (CNIPA) on Oct. 21, 2024, the disclosure of which is incorporated herein by reference in its entirety.

### TECHNICAL FIELD

The present application relates to the field of battery technologies, for example, a thermal management system, a battery pack, and a vehicle.

### BACKGROUND

To satisfy the high-capacity requirements of commercial vehicles and trucks, each battery pack is provided with multiple layers of battery modules to satisfy the required capacity, with each layer of battery module corresponding to a liquid cooling plate configured to exchange heat with the battery module.

### TECHNICAL PROBLEM

In the related art, since different liquid cooling plates generally receive coolant through the same main liquid inlet, the coolant flowing to a liquid cooling plate farther from the main liquid inlet passes through a longer pipe. During this process, heat exchange with the ambient air inevitably occurs, causing the temperature of the coolant entering the liquid cooling plate farther from the main liquid inlet to be slightly higher. As a result, the heat exchange effect on the battery modules is suboptimal, leading to temperature non-uniformity across the battery pack and negatively affecting the service life of the battery pack.

### TECHNICAL SOLUTION

The present application provides a thermal management system. The thermal management system includes a main liquid inlet pipe, a main liquid outlet pipe, and at least two liquid cooling plates. A main liquid inlet and at least two liquid inlets are spaced apart and disposed on the main liquid inlet pipe in sequence. A main liquid outlet and at least two liquid outlets are spaced apart and disposed on the main liquid outlet pipe in sequence. The at least two liquid cooling plates are spaced apart along a preset direction. Each liquid cooling plate communicates with one liquid inlet and one liquid outlet. The thermal management system includes at least one of the following configurations: The cross-sectional area of a liquid inlet closer to the main liquid inlet is smaller than the cross-sectional area of a liquid inlet farther from the main liquid inlet; or the liquid flow space inside a liquid cooling plate closer to the main liquid inlet is smaller than the liquid flow space inside a liquid cooling plate farther from the main liquid inlet.

The present application also provides a battery pack. The battery pack includes the thermal management system and at least two stacked battery modules placed on the at least two liquid cooling plates in a one-to one manner. Each liquid cooling plate is configured to exchange heat with a corresponding battery module.

The present application also provides a vehicle. The vehicle includes a vehicle body and the battery pack disposed on the vehicle body.

### BENEFICIAL EFFECTS

In the thermal management system of the present application, along the liquid flow direction of the main liquid inlet pipe, the cross-sectional areas of the at least two liquid inlets gradually increase. This allows more coolant to flow into the corresponding liquid cooling plates per unit time. In other words, the farther a liquid cooling plate is from the main liquid inlet, the larger the amount of liquid entering this liquid cooling plate, thereby compensating for the reduction in heat exchange capacity caused by the slightly higher temperature of the liquid entering those farther liquid cooling plates. Alternatively, along the liquid flow direction of the main liquid inlet pipe, the liquid flow spaces of the at least two liquid cooling plates gradually increase. This allows farther liquid cooling plates to have larger spaces to accommodate coolant. That is, with the same contact area, more coolant participates in heat exchange with the battery module, thereby likewise compensating for the reduction in heat exchange capacity caused by the slightly higher temperature of the liquid entering those farther liquid cooling plates. As a result, the heat exchange capacities of the liquid cooling plates arranged progressively farther from the main liquid inlet remain consistent. This ensures that the operating temperatures of the battery modules tend to be uniform, thereby improving the overall temperature uniformity of the battery pack and extending the service life of the battery pack.

### BRIEF DESCRIPTION OF DRAWINGS

FIG. 1 is a structure view of a battery pack according to embodiments of the present application.
FIG. 2 is a structure view of a thermal management system according to embodiments of the present application.
FIG. 3 is a structure view of a main liquid inlet pipe and a main liquid outlet pipe according to embodiments of the present application.
FIG. 4 is a side view of a thermal management system according to embodiments of the present application.
FIG. 5 is an enlarged view of part A of FIG. 4.
FIG. 6 is a section view of liquid cooling plates of a thermal management system according to embodiments of the present application.
FIG. 7 is an enlarged view of part B of FIG. 6.
FIG. 8 is a schematic view of a vehicle according to embodiments of the present application.

### Reference list

100. vehicle; 110. vehicle body; 120. battery pack; 10. main liquid inlet pipe; 11. main liquid inlet; 12. liquid inlet joint; 121. liquid inlet; 13. first subpipe;
20. main liquid outlet pipe; 21. main liquid outlet; 22. liquid outlet joint; 221. liquid outlet; 23. second subpipe;
30. liquid cooling plate; 31. flat plate; 32. flow channel plate; 321. edge; 322. protrusion; 323. recess; 33. liquid inlet pipe; 34. liquid outlet pipe;
40. first adapter; 50. second adapter;
200. battery module

### DETAILED DESCRIPTION

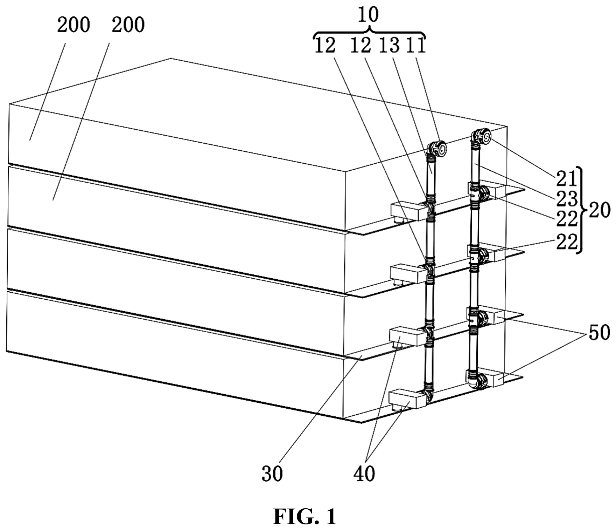

As shown in FIG. 1, the present application provides a battery pack. The battery pack includes at least two battery modules 200 arranged in a stacked manner. The at least two battery modules 200 are subjected to thermal management through a thermal management system, thereby ensuring that the operating temperature of the battery modules 200 remains stable within a certain range. The thermal management system includes at least two liquid cooling plates 30. Each battery module 200 corresponds to one liquid cooling plate 30 for heat exchange with the battery module 200 adjacent to the liquid cooling plate 30. To simplify the pipeline arrangement, the at least two liquid cooling plates 30 are supplied with liquid through the same main liquid inlet pipe 10, and the heat-exchanged liquid is discharged through the same main liquid outlet pipe 20. A main liquid inlet 11 and at least two liquid inlet joints 12 are spaced apart and disposed on the main liquid inlet pipe 10 in sequence. The main liquid inlet 11 and the liquid inlet joint 12 are connected through a first subpipe 13. Two adjacent liquid inlet joints 12 are also connected through a first subpipe 13. A main liquid outlet 21 and at least two liquid outlet joints 22 are spaced apart and disposed on the main liquid outlet pipe 20 in sequence. The main liquid outlet 21 and the liquid outlet joint 22 are connected through a second subpipe 23. Two adjacent liquid outlet joints 22 are also connected through a second subpipe 23. The liquid inlet joints 12, the liquid cooling plates 30, and the liquid outlet joints 22 correspond to each other in a one-to-one manner and communicate with each other in sequence. It is to be understood that the coolant enters from the main liquid inlet 11 and first passes through the liquid inlet joint 12 closest to the main liquid inlet 11 into the corresponding liquid cooling plate 30 , and the coolant flows a certain distance and then enters the next layer of liquid cooling plate 30, and so on.

During the process in which the coolant enters the main liquid inlet pipe 10 and then flows into different layers of liquid cooling plates 30 in sequence, the coolant entering the liquid cooling plate 30 closer to the main liquid inlet 11 has a lower temperature due to the shorter distance, resulting in better heat exchange with the corresponding battery module 200; and in contrast, when the coolant enters the liquid cooling plate 30 farther from the main liquid inlet 11, the temperature of the coolant increases as the coolant flows through a longer pipeline and exchanges heat with the external environment, leading to poorer heat exchange with the corresponding battery module 200. Consequently, the operating temperatures of different battery modules 200 in the battery pack vary, thereby shortening the service life of the battery pack.

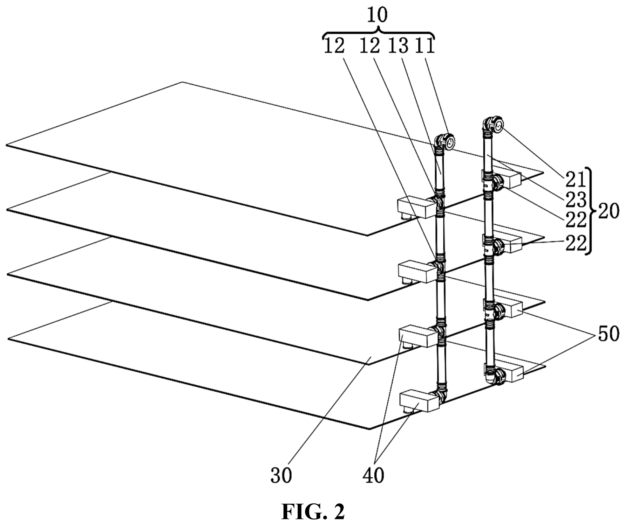

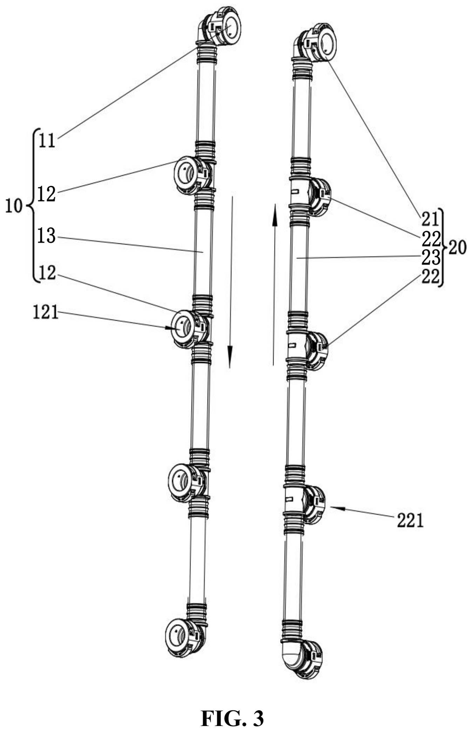

The present application provides a thermal management system capable of balancing the heat exchange capacity of each layer of liquid cooling plate 30, ensuring that the degree of heat exchange for each battery module 200 is generally consistent, thereby equalizing the operating temperature of each battery module 200 and extending the service life of the battery pack. As shown in FIG. 2 and FIG. 3, the arrows along the upper and lower directions in FIG. 3 indicate the flow directions of the coolant. In this thermal management system, a main liquid inlet 11 and at least two liquid inlets 121 are spaced apart and disposed on the main liquid inlet pipe 10 in sequence; and a main liquid outlet 21 and at least two liquid outlets 221 are spaced apart and disposed on the main liquid outlet pipe 20 in sequence. In FIG. 3, the liquid outlets 221 are arranged on the rear side, as indicated by arrows. In some embodiments, the thermal management system includes at least one of the following configurations: The cross-sectional area of a liquid inlet 121 closer to the main liquid inlet 11 is smaller than the cross-sectional area of a liquid inlet 121 farther from the main liquid inlet 11; or the liquid flow space inside a liquid cooling plate 30 closer to the main liquid inlet 11 is smaller than the liquid flow space inside a liquid cooling plate 30 farther from the main liquid inlet 11.

In the thermal management system, the farther the liquid inlet 121 is from the main liquid inlet 11, the larger cross-sectional area the liquid inlet 121 has. This allows more coolant to flow into the corresponding liquid cooling plates 30 per unit time. In other words, the farther a liquid cooling plate 30 is from the main liquid inlet 11, the larger the amount of liquid entering this liquid cooling plate 30, thereby compensating for the reduction in heat exchange capacity caused by the slightly higher temperature of the liquid entering those farther liquid cooling plates 30. In some embodiments, the liquid cooling plates 30 farther from the main liquid inlet 11 have larger liquid flow spaces. This allows farther liquid cooling plates 30 to have larger spaces to accommodate coolant. That is, with the same contact area, more coolant participates in heat exchange with the battery module 200, thereby likewise compensating for the reduction in heat exchange capacity caused by the slightly higher temperature of the liquid entering those farther liquid cooling plates 30. As a result, the heat exchange capacities of the liquid cooling plates 30 arranged progressively farther from the main liquid inlet 11 tend to be consistent. This ensures that the operating temperatures of the battery modules 200 tend to be uniform, thereby improving the overall temperature uniformity of the battery pack and extending the service life of the battery pack.

In a possible embodiment, the liquid outlet 221 and the liquid inlet 121 for the same liquid cooling plate 30 have the same cross-sectional area, thereby facilitating stable liquid flow within the liquid cooling plate 30.

In a possible embodiment, both the liquid inlets 121 and the liquid outlets 221 have circular cross sections, thereby minimizing the resistance to liquid flow in the main liquid inlet pipe 10 or the main liquid outlet pipe 20.

In a possible embodiment, as shown in FIG. 2, the main liquid inlet 11 and the main liquid outlet 21 are located at the same end of the liquid cooling plates 30. In other possible embodiments, as shown in FIG. 2, the main liquid inlet 11 and the main liquid outlet 21 are located at two opposite ends of the liquid cooling plates 30.

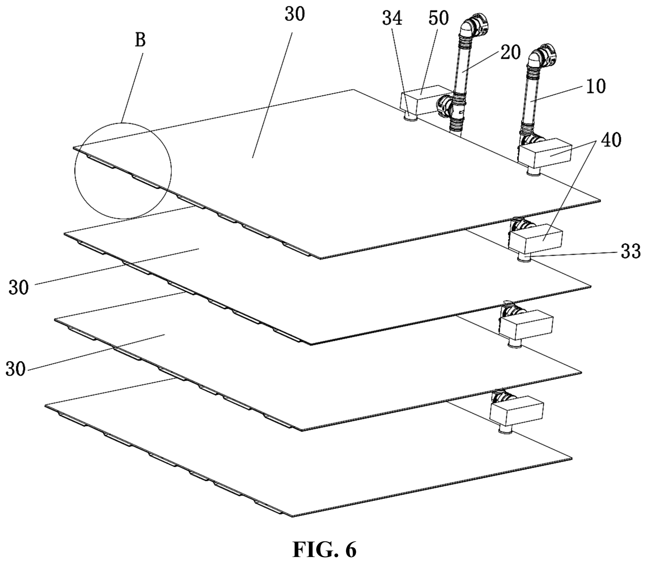

As shown in FIG. 2 and FIG. 6, the thermal management system also includes first adapters 40 and second adapters 50. Each liquid cooling plate 30 has a liquid inlet pipe 33 and a liquid outlet pipe 34. Each liquid inlet pipe 33 communicates with a corresponding liquid inlet 121 through a corresponding first adapter 40. Each liquid outlet pipe 34 communicates with a corresponding liquid outlet 221 through a corresponding second adapter 50.

As shown in FIG. 2 and FIG. 6, each first adapter 40 and each second adapter 50 are both cubic; for each liquid inlet pipe 33, the axial direction of the liquid inlet pipe 33 is perpendicular to the axial direction of the corresponding liquid inlet 121, and the liquid inlet pipe 33 and the corresponding liquid inlet 121 are connected to two side surfaces of the corresponding first adapter 40 perpendicular to each other; and for each liquid outlet pipe 34, the axial direction of the liquid outlet pipe 34 is perpendicular to the axial direction of the corresponding liquid outlet 221, and the liquid outlet pipe 34 and the corresponding liquid outlet 221 are connected to two side surfaces of the corresponding second adapter 50 perpendicular to each other. With this arrangement, pipes perpendicular to each other can be well connected, facilitating neat appearance. Of course, the first adapters 40 and the second adapters 50 may also be hoses. This is not limited here.

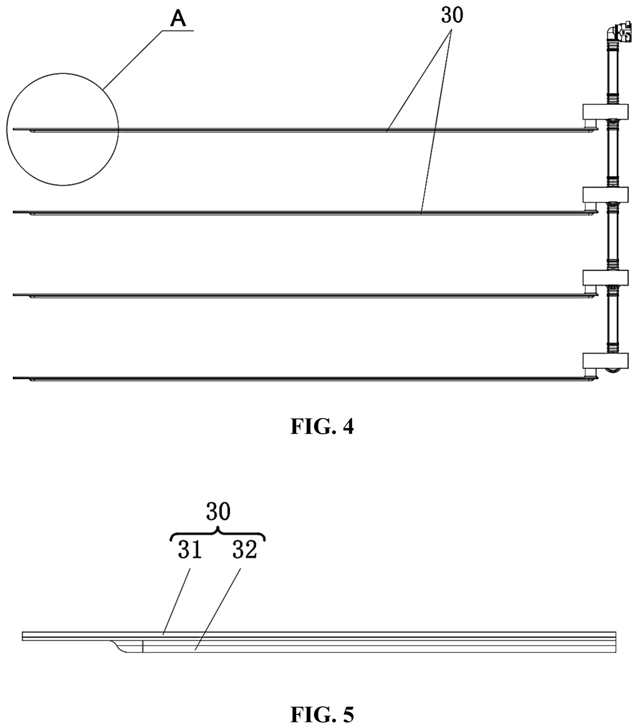

As shown in FIG. 4 to FIG. 7, each liquid cooling plate 30 includes a flat plate 31 and a flow channel plate 32 connected in a stacked manner. The flow channel plate 32 is recessed away from the flat plate 31 to form a recess 323 as a flow channel. In some possible embodiments, the flow channel is configured in at least one of the following manners: The flow channel height inside a liquid cooling plate 30 closer to the main liquid inlet 11 is smaller than the flow channel height inside a liquid cooling plate 30 farther from the main liquid inlet 11; or the flow channel width inside a liquid cooling plate 30 closer to the main liquid inlet 11 is smaller than the flow channel width inside a liquid cooling plate 30 farther from the main liquid inlet 11. With this arrangement, the flow spaces inside the liquid cooling plates 30 farther from the main liquid inlet 11 are expanded.

The flat plate 31 and the flow channel plate 32 are joined by brazing. It is to be understood that brazing is performed at the edges 321 of the flat plate 31 and the flow channel plate 32 and at the protrusion 322 formed after the recessing of the flow channel plate 32. The brazed liquid cooling plate 30 exhibits good welding stability and small deformation of components, ensuring that the dimensions of the battery pack remain within tolerance.

The present application also provides a battery pack. The battery pack includes the thermal management system and at least two stacked battery modules 200 placed on the at least two liquid cooling plates 30 in a one-to one manner. Each liquid cooling plate 30 is configured to exchange heat with a corresponding battery module 200.

The battery pack of the present application uses the thermal management system to balance the temperature of each battery module 200, improve the temperature uniformity of the battery pack, and prolong the service life of the battery pack.

As shown in FIG. 1, a liquid cooling plate 30 is sandwiched between two adjacent battery modules 200. For each liquid cooling plate 30, the upper surface of the liquid cooling plate 30 is a flat surface, the liquid cooling plate 30 can exchange heat with the battery module 200 on the upper surface of the liquid cooling plate 30, and the lower surface of the liquid cooling plate 30 is also in contact with the battery module 200 on the lower surface of the liquid cooling plate 30 to reduce the temperature of the battery module 200 on the lower surface of the liquid cooling plate 30.

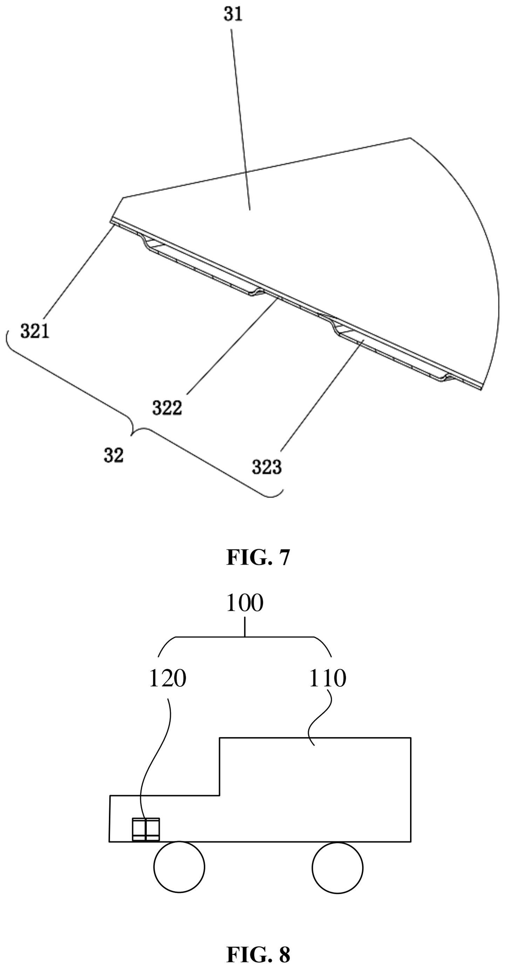

As shown in FIG. 8, the present application also provides a vehicle 100. The vehicle 100 includes a vehicle body 110 and the battery pack 120 of the preceding embodiment disposed on the vehicle body. The vehicle 100 is powered by a battery pack 120 having improved temperature uniformity, thereby preventing localized overheating at the installation position of the battery pack 120 in the vehicle 100 and improving the user experience.

## Claims

1. A thermal management system, comprising:
a main liquid inlet pipe (10), wherein a main liquid inlet (11) and at least two liquid inlets (121) are spaced apart and disposed on the main liquid inlet pipe (10) in sequence;
a main liquid outlet pipe (20), wherein a main liquid outlet (21) and at least two liquid outlets (221) are spaced apart and disposed on the main liquid outlet pipe (20) in sequence; and
at least two liquid cooling plates (30) spaced apart along a preset direction, wherein each of the at least two liquid cooling plates (30) communicates with one of the at least two liquid inlets (121) and one of the at least two liquid outlets (221);
wherein the thermal management system comprises at least one of the following configurations:
among the at least two liquid inlets (121), a cross-sectional area of a liquid inlet (121) closer to the main liquid inlet (11) is smaller than a cross-sectional area of a liquid inlet (121) farther from the main liquid inlet (11); or
among the at least two liquid cooling plates (30), a liquid flow space inside a liquid cooling plate (30) closer to the main liquid inlet (11) is smaller than a liquid flow space inside a liquid cooling plate (30) farther from the main liquid inlet (11).

2. The thermal management system of claim 1, wherein a liquid outlet (221) and an liquid inlet (121) communicating with a same liquid cooling plate (30) have a same cross-sectional area.

3. The thermal management system of claim 1, wherein a cross section of each liquid inlet (121) and a cross section of each liquid outlet (221) are both circular.

4. The thermal management system of claim 1, 2, or 3, wherein each liquid cooling plate (30) comprises a flat plate (31) and a flow channel plate (32) connected in a stacked manner, and the flow channel plate (32) is recessed away from the flat plate (31) to form a flow channel;
wherein the flow channel is configured in at least one of the following manners:
among the at least two liquid cooling plates (30), a flow channel height inside a liquid cooling plate (30) closer to the main liquid inlet (11) is smaller than a flow channel height inside a liquid cooling plate (30) farther from the main liquid inlet (11); or
among the at least two liquid cooling plates (30), a flow channel width inside a liquid cooling plate (30) closer to the main liquid inlet (11) is smaller than a flow channel width inside a liquid cooling plate (30) farther from the main liquid inlet (11).

5. The thermal management system of claim 4, wherein the flat plate (31) and the flow channel plate (32) are joined by brazing.

6. The thermal management system of any one of claims 1 to 5, further comprising first adapters (40) and second adapters (50), wherein each liquid cooling plate (30) has a liquid inlet pipe (33) and a liquid outlet pipe (34), each liquid inlet pipe (33) communicates with a corresponding liquid inlet (121) through a corresponding first adapter (40), and each liquid outlet pipe (34) communicates with a corresponding liquid outlet (221) through a corresponding second adapter (50).

7. The thermal management system of claim 6, wherein
each first adapter (40) and each second adapter (50) are both cubic;
for each liquid inlet pipe (33), an axial direction of the liquid inlet pipe (33) is perpendicular to an axial direction of a corresponding liquid inlet (121), and the liquid inlet pipe (33) and the corresponding liquid inlet (121) are connected to two side surfaces of a corresponding first adapter (40) perpendicular to each other; and
for each liquid outlet pipe (34), an axial direction of the liquid outlet pipe (34) is perpendicular to an axial direction of a corresponding liquid outlet (221), and the liquid outlet pipe (34) and the corresponding liquid outlet (221) are connected to two side surfaces of a corresponding second adapter (50) perpendicular to each other.

8. The thermal management system of any one of claims 1 to 5, wherein
the main liquid inlet (11) and the main liquid outlet (21) are located at a same end of the at least two liquid cooling plates (30); or
the main liquid inlet (11) and the main liquid outlet (21) are located at two opposite ends of the at least two liquid cooling plates (30).

9. A battery pack, comprising:
the thermal management system of any one of claims 1 to 8; and
at least two stacked battery modules (200) placed on upper surfaces of the at least two liquid cooling plates (30) in a one-to-one manner, wherein each liquid cooling plate (30) is configured to exchange heat with a corresponding battery module (200).

10. The battery pack of claim 9, wherein for each liquid cooling plate (30), the liquid cooling plate (30) is sandwiched between two adjacent battery modules (200) of the at least two stacked battery modules (200), and the liquid cooling plate (30) is configured to exchange heat with a battery module (200) on a lower surface of the liquid cooling plate (30).

11. A vehicle, comprising a vehicle body (110) and the battery pack (120) of claim 9 or 10 disposed on the vehicle body (110).
